# EUROPÄISCHE PATENTSCHRIFT

(11) **EP 0 368 027 B1**
(45) Veröffentlichungstag und Bekanntmachung des Hinweises auf die Patenterteilung: **28.09.1994**
(21) Anmeldenummer: 89119122.3
(22) Anmeldetag: 14.10.1989
(51) Int. Cl.: B26D 7/01, B29C 67/14

(54) **Verfahren zur Herstellung von Mattenpaketen aus klebrigen Werkstoffbahnen und Vorrichtung zur Durchführung des Verfahrens**
Method and apparatus for making layered products from self-adhesive webs of a material
Méthode et dispositif de fabrication de produits stratifiés en partant de bandes autocollantes

(30) Priorität: 11.11.1988 DE 3838270
(43) Veröffentlichungstag der Anmeldung: 16.05.1990
(73) Patentinhaber: Umformtechnik ERFURT GmbH, D-99086 Erfurt (DE)
(72) Erfinder: Brüssel, Richard, D-7519 Sulzfeld (DE)

(56) Entgegenhaltungen:
- DE-A- 2 932 698
- DE-A- 3 117 608
- GB-A- 1 546 779
- US-A- 4 362 585
- PATENT ABSTRACTS OF JAPAN, Band 10, Nr. 2 (M-444)[2059], 8. Januar 1986;& JP-A-60 167 851 (KOUNAN) 31-08-1985
- MODERN PLASTICS INTERNATIONAL, Band 16, Nr. 10, Oktober 1986, Seiten 132-135,McGraw Hill, Inc., Lausanne, CH; E. NEISE: "Automated prepreg processing"
- PLASTVERARBEITER, Band 33, Nr.4 April 1982, Seiten 399-403, Speyer/ Rhein, DE; W.ERMERT et al, "Herstellung von Bauteilen aus CFK mit Industrierobotern"

## Beschreibung

Die Erfindung betrifft ein Verfahren zur Herstellung von Mattenpaketen aus klebrigen Werkstoffbahnen, insbesondere SMC-Harzmattenbahnen, bei dem die Werkstoffbahn der Breite des zu erzeugenden Mattenstreifens entsprechend abschnittweise und unter Entfernen ihrer Deckfolie einer Schneideinrichtung zugeführt und von dieser in festgeklemmtem Zustand in Mattenstreifen unterteilt wird, von denen jeweils mehrere übereinander auf einer Transporteinrichtung abgelegt werden. Gegenstand der Erfindung ist weiterhin eine Vorrichtung zur Durchführung des Verfahrens mit einer Vorschubeinrichtung, über welche die Werkstoffbahn an einer Klemmeinrichtung vorbei in den Bereich der Schneideinrichtung zuführbar ist, mit einem dieser vorgeschalteten Deckfolienabzug und mit einer vertikal und horizontal beweglichen Transporteinrichtung, die unter den zu erzeugenden Mattenstreifen verfahrbar ist.

Um die Verarbeitung der hier insbesondere angesprochenen härtbaren Formmassen (sog. SMC = sheet moulding compound) mittels Preßwerkzeugen zu Formteilen wirtschaftlich durchführen zu können, wird eine weitgehende Automatisierung vor allem auch der Verfahrensschritte angestrebt, die zwischen der Lagerung der Werkstoffbahn als Vormaterial und der Zuführung dieses Vormaterials in Form von Mattenpaketen in den Bereich des Preßwerkzeugs liegen.
Bei den bisher bekannten Verfahren und Vorrichtungen ...( Plast-Verarbeiter 33 (1982) Nr. 4, Speyer / Rhein, DE, Seiten 399 - 403, welches Dokument den oberbegriffen der Ansprüche 1 und 4 entspricht) wird die im Normalfall auf Rollen gewickelte, mit Deckfolien beschichtete SMC-Harzmattenbahn unter Einwirkung einer mit Vorschubwalzen ausgestatteten Vorschubeinrichtung abgespult, von den Deckfolien befreit und mittels einer Schneideinrichtung in Mattenstreifen mit geeigneter Streifenbreite (sog. Zuschnitte) unterteilt. Aus diesen wird durch Ablegen mehrerer Mattenstreifen übereinander ein Mattenpaket gebildet, welches in dem Preßwerkzeug weiterverarbeitet wird.
Beim Stand der Technik liegt der durch den Schnittvorgang erzeugte Mattenstreifen auf einem Transportband, mehreren zueinander parallelen schmalen Transportbändern oder auch Schiebeleisten. Der betreffende Mattenstreifen wird durch Sauggreifer oder Nadelgreifer von der Transporteinrichtung abgenommen und auf einen Stapelplatz abgelegt, wobei durch Übereinanderlegen mehrerer Mattenstreifen das bereits erwähnte Mattenpaket gebildet wird.
Der Nachteil dieser Vorgehensweise und Ausgestaltung besteht darin, daß für die Bildung des Mattenpakets eine verhältnismäßig lange Zeitspanne benötigt wird und daß die Einrichtungen, mittels welcher der Mattenstreifen aufgenommen und weiter transportiert wird, in technischer Hinsicht verhältnismäßig aufwendig und durch die klebrige Eigenschaft der Mattenstreifen verschmutzungsgefährdet sind.

Der Erfindung liegt die Aufgabe zugrunde, ein Verfahren und eine Vorrichtung zur Durchführung des Verfahrens anzugeben, welche bei verhältnismäßig geringem technischem Aufwand und bei verminderter Verschmutzungsempfindlichkeit der in Frage kommenden Bestandteile eine Herabsetzung der für die Bildung des Mattenpakets benötigten Zeitspanne zulassen.

Die gestellte Aufgabe wird durch ein Verfahren mit den Merkmalen des Patentanspruchs 1 bzw. durch eine Vorrichtung mit den Merkmalen des Anspruchs 4 gelöst. Gemäß der erfindung wird die in Mattenstreifen zu unterteilende Werkstoffbahn bis zur Durchführung des Schnittvorgangs kurzzeitig an einem Stützelement (vorzugsweise in Form eines Untergreifrechens) abgestützt und nach dessen Entfernung - unter Einsparung eines zusätzlichen Greiforgans - vor dem Schnittvorgang unmittelbar auf einer Transporteinheit (vorzugsweise in Form eines Stapelrechens) abgelegt; das nach und nach gebildete Mattenpaket wird auf dieser Transporteinheit liegend dem Preßwerkzeug zugeführt.

Das Verfahren läßt sich vorteilhaft in der Weise ausgestalten, daß das Stützelement durch eine geradlinige Bewegung an dem Endabschnitt zur Anlage gebracht (Anspruch 2) bzw. die Werkstoffbahn durch bezüglich ihrer Ebene schrägverlaufende Schnitte in Mattenstreifen mit der erforderlichen Streifenbreite unterteilt wird (Anspruch 3).

Die zur Durchführung des Verfahrens - geeignete Vorrichtung weist gemäß Anspruch 4 das bereits erwähnte Stützelement auf, welches unter dem in der Nähe der Schneideinrichtung frei vorkragenden Endabschnitt der Werkstoffbahn zur Anlage gebracht werden kann, die der Streifenbreite entsprechende Zuführbewegung der Werkstoffbahn mit ausführt und nach Abschluß der Zuführbewegung vom Endabschnitt der Werkstoffbahn abgezogen werden kann. Die Synchronisierung zwischen der Zuführbewegung und der Mitlaufbewegung des Stützelements läßt sich dabei in einfacher Weise dadurch verwirklichen, daß während dieser Zeitspanne der Antrieb des Stützelements - welches vorzugsweise als Untergreifrechen ausgebildet ist - über den Antrieb der Vorschubeinrichtung für die Werkstoffbahn gesteuert wird.

Bei einer besonders einfach ausgestalteten Ausführungsform der Vorrichtung ist das Stützelement an einer geradlinigen Führungsbahn verfahrbar gehalten (Anspruch 5).
Um auch bei unterschiedlichen Betriebsverhältnissen sicherzustellen, daß das Stützelement in den Bereich unterhalb des Endabschnitts der Werkstoffbahn gelangt, kann die Führungsbahn bezüglich deren Ebene auch eine geringfügige Neigung aufweisen.
Eine andere Möglichkeit, die Lage des Stützelements an unterschiedliche Betriebsverhältnisse anpassen zu können, besteht darin, das Stützelement bezüglich der Führungsbahn schwenkbar und über einen Schwenkantrieb in unterschiedlichen Schwenkstellungen festhaltbar auszubilden (Anspruch 6). Eine derartige Ausführungsform gestattet es, das Stützelement in herabgeschwenktem Zustand an der Führungsbahn geradlinig in den Bereich unterhalb des Endabschnitts der Werkstoffbahn zu verfahren und erst anschließend durch Hochschwenken bezüglich der Führungsbahn an dem Endabschnitt zur Anlage zu bringen sowie in dieser Stütz- oder Mitnahmestellung festzuhalten.

Die Vorrichtung kann weiterhin auch in der Weise ausgebildet sein, daß der dem Endabschnitt der Werkstoffbahn zugewandte Stützbereich des Stützelements bezüglich der Ebene der Werkstoffbahn abwärts gekrümmt ist (Anspruch 7); durch eine derartige Ausbildung ist sichergestellt, daß der Stützbereich des Stützelements, ohne unnötig mit dem Endabschnitt zu verhaken, in den Bereich unterhalb des Endabschnitts verfahren werden kann.

Die Betriebssicherheit der Vorrichtung läßt sich unter Umständen dadurch verbessern, daß der dem Endabschnitt der Werkstoffbahn zugewandte Stützbereich des Stützelements haftungsvermindernd ausgestaltet ist (Anspruch 8); insbesondere kann dabei eine Beschichtung zur Anwendung kommen, welche die von der klebrigen Werkstoffbahn ausgehende Wirkung lediglich soweit herabsetzt, daß die Mitnahmewirkung des Stützelements nicht in Frage gestellt ist.

Mit Rücksicht darauf, daß das Mattenpaket bereits im Bereich der Schneideinrichtung gebildet werden soll, ist diese mit einem bezüglich der Ebene der Werkstoffbahn schräggestellten Schneidteil ausgestattet (Anspruch 9); durch die Schrägstellung ist jeweils ein geringer Abstand zur Schnittfläche des bereits zuvor erzeugten, auf der Transporteinrichtung abgelegten Mattenstreifens sichergestellt.

Die Erfindung wird nachfolgend anhand der Zeichnung im einzelnen erläutert.
Es zeigen:

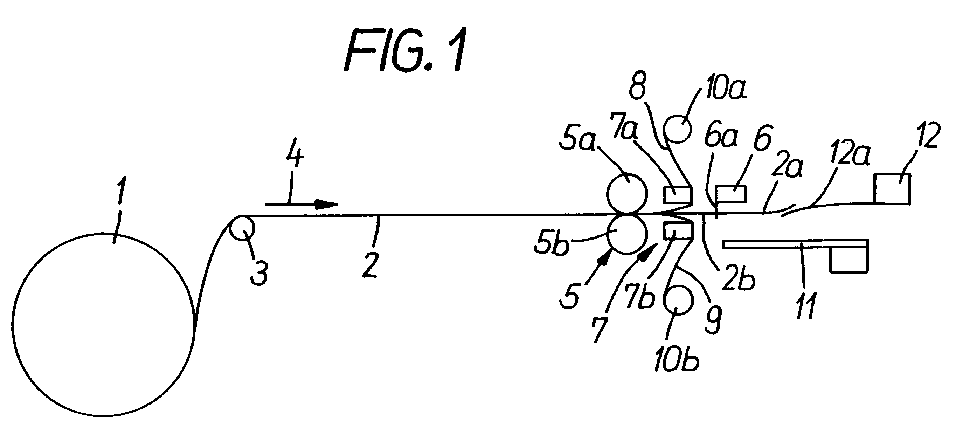

- Fig. 1: eine schematische Darstellung, aus welcher die Behandlung einer SMC-Harzmattenbahn bis zur Bildung eines Mattenpaketes ersichtlich ist, und
- Fig. 2: eine schematische Darstellung des schräggestellten Schneidteils der Schneideinrichtung und die Bildung des Mattenpaketes.

Von einem Coil 1 wird eine SMC-Harzmattenbahn 2 unter Abstützung an einer Umlenkrolle 3 in Richtung des Pfeiles 4 abgerollt und mittels einer Vorschubeinrichtung 5 mit beiderseits an der Harzmattenbahn anliegenden Vorschubwalzen 5a, 5b einer Schneideinrichtung 6 mit einem Schneidteil 6a zugeführt.
Der Schneideinrichtung ist eine Klemmeinrichtung 7 vorgelagert, über deren gegeneinander höhenverstellbare Klemmbacken 7a, 7b die Harzmattenbahn 2 zur Durchführung des Schnittvorgangs festklemmbar ist.

Die Klemmbacken 7a und 7b gestatten es, die obere und untere Deckfolie 8 bzw. 9 der Harzmattenbahn 2 bei geöffneter Klemmeinrichtung 7 mittels der einen Deckfolienabzug bildenden Abzugswalzen 10a, 10b nach oben bzw. unten abzuziehen.

Mittels der Vorschubeinrichtung 5 wird die Harzmattenbahn 2 um ein der Streifenbreite entsprechendes Wegstück nach rechts vorgeschoben, wobei die Deckfolien 8 und 9 abgezogen werden; im Anschluß daran wird nach dem Schließen der Klemmeinrichtung 7 bei stillstehender Harzmattenbahn 2 durch Betätigen der Schneideinrichtung 6 ein Mattenstreifen 2a gebildet, der unmittelbar oder mittelbar auf einem vertikal und horizontal beweglichen Stapelrechen 11 abgelegt wird.
Nach der Lehre der Erfindung ist zusätzlich ein Stützelement in Form eines Untergreifrechens 12 vorgesehen, dessen nach links gerichteter Stützbereich 12a unter dem Endabschnitt 2b der Harzmattenbahn 2 zur Anlage gebracht werden kann, welcher über die Klemmeinrichtung 7 hinaus nach rechts frei vorkragt. Dies wird dadurch ermöglicht, daß der Untergreifrechen 12 an einer nicht dargestellten Führungsbahn hin und her verfahrbar gehalten ist und einen bezüglich der Ebene der Harzmattenbahn abwärts gekrümmten Stützbereich 12a aufweist.

Sobald der Stützbereich 12a unter dem vorkragenden Endabschnitt 2b zur Anlage gekommen ist, wird nach Lösen der Klemmeinrichtung 7 die Vorschubeinrichtung 5 in Gang gesetzt, wobei - zur Abstützung der Harzmattenbahn 2 - der Untergreifrechen 12 synchron mit der Zuführbewegung um das der Streifenbreite entsprechende Wegstück nach rechts mitbewegt wird.
Nach dem Festsetzen der Harzmattenbahn 2 durch Betätigen der Klemmeinrichtung 7 wird der Stapelrechen unter den abzutrennenden Mattenstreifen 2 bewegt und der Untergreifrechen 12 nach rechts abgezogen, bevor durch Betätigen der Schneideinrichtung 6 ein (bzw. ein weiterer) Mattenstreifen 2a erzeugt und von dem Stapelrechen 11 aufgenommen wird.

Durch mehrfaches Wiederholen der geschilderten Vorgänge unter zeitweiliger Einschaltung des Untergreifrechens 12 kann ohne besonderen technischen Aufwand dadurch unmittelbar ein Mattenpaket erzeugt werden, daß die jeweils erzeugten Mattenstreifen 2a übereinander auf dem Stapelrechen 11 abgelegt werden.

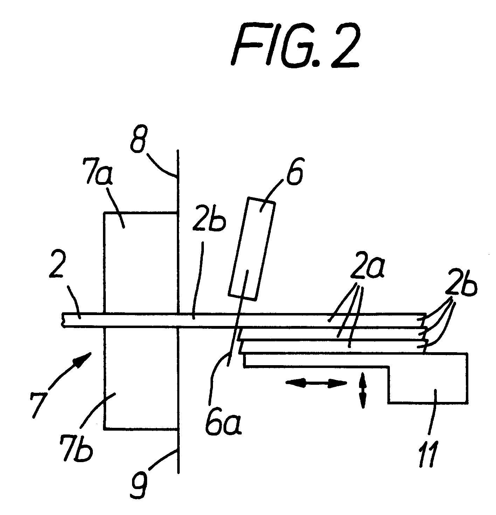

Aus Fig. 2 ist ersichtlich, daß das Schneidteil 6a der Schneideinrichtung 6 bezüglich der Ebene der Harzmattenbahn 2 schrägverlaufende Schnitte ausführt. Dies hat zur Folge, daß das Schneidteil bezüglich der zuvor erzeugten Mattenstreifen 2a einen geringen Abstand aufweist und diese bereits auf der Transporteinrichtung 11 übereinander abgelegten Mattenstreifen nicht nochmals erfaßt.

Der mit der Erfindung erzielte Vorteil ist insbesondere darin zu sehen, daß ohne Einschaltung technisch aufwendiger und störanfälliger Zusatzorgane bereits im Bereich der Schneideinrichtung ein Mattenpaket gebildet und mittels der aufnehmenden Transporteinrichtung der Weiterverarbeitung (in dem nachgeschalteten Preßwerkzeug) zugeführt werden kann.

Die Funktionsfähigkeit des Erfindungsgegenstandes läßt sich unter Umständen dadurch weiter verbessern, daß der an dem Endabschnitt der Harzmattenbahn anliegende Stützbereich 12a des Untergreifrechens 12 mit einer Beschichtung ausgestattet ist, welche die Haftung zwischen der klebrigen Harzmattenbahn und dem Stützbereich herabsetzt und dadurch das Abziehen des Stützbereichs von der Harzmattenbahn erleichtert, ohne die Stütz- und Mitnahmewirkung des Untergreifrechens während der Zuführbewegung in Frage zu stellen.

Das Stützelement kann auch andersartig ausgebildet sein als zuvor beschrieben; wesentlich im Zusammenhang mit der gestellten Aufgabe ist es, daß der freivorkragende Abschnitt der Harzmattenbahn während deren Zuführbewegung in Richtung auf die Schneideinrichtung zumindest annähernd in einer Lage gehalten wird, welche die nachfolgenden Arbeitsschritte, nämlich die Ablage auf der Transporteinrichtung und den Schnittvorgang, nicht erschwert.

## Patentansprüche

1. Verfahren zur Herstellung von Mattenpaketen aus klebrigen Werkstoffbahnen, insbesondere SMC-Harzmattenbahnen, bei dem die Werkstoffbahn (2) der Breite des zu erzeugenden Mattenstreifens (2a) entsprechend abschnittsweise einer Klemmeinrichtung (7) und, unter Entfernen ihrer Deckfolien (8,9), einer Schneideinrichtung (6) zugeführt und von dieser bei Betätigung der Klemmeinrichtung (7) in Mattenstreifen (2a) unterteilt wird, von denen jeweils mehrere übereinander auf einer Transporteinrichtung (11) abgelegt werden,
dadurch gekennzeichnet,
daß nach jedem Schnittvorgang ein Stützelement (12) unter den aus der Klemmeinrichtung (7) herausragenden Endabschnitt (2b) der Werkstoffbahn (2) geschoben wird und diesen abstützend während der Zuführbewegung synchron mit dieser mitbewegt wird, und daß zur Bildung eines neuen Mattenpaketes die Transporteinrichtung (11) jeweils derart unterhalb des zu erzeugenden Mattenstreifens (2a) verfahren wird, daß, nachdem die Zuführbewegung zum Stillstand gekommen ist und anschließend das Stützelement (12) von der Werkstoffbahn (2) abgezogen ist, der während jedes Schnittvorganges erzeugte Mattenstreifen (2a) von der Transporteinrichtung (11) aufgenommen werden kann.

2. Verfahren nach Anspruch 1,
dadurch gekennzeichnet,
daß das Stützelement (12) durch eine geradlinige Bewegung an dem Endabschnitt (2b) zur Anlage gebracht wird.

3. Verfahren nach Anspruch 1,
dadurch gekennzeichnet,
daß die Werkstoffbahn (2) durch bezüglich ihrer Ebene schräg verlaufende Schnitte in Mattenstreifen (2a) unterteilt wird.

4. Vorrichtung zur Durchführung des Verfahrens nach zumindest einem der Ansprüche 1 bis 3, mit einer Klemmeinrichtung (7), einer Schneideinrichtung (6) und einer Vorschubeinrichtung (5), durch die die Werkstoffbahn (2) an der Klemmeinrichtung (7) vorbei in den Bereich der Schneideinrichtung (6) zuführbar ist, mit einem Deckfolienabzug (10a,10b), der zwischen der Klemmeinrichtung (7) und der Schneideinrichtung (6) angeordnet ist, und mit einer vertikal und horizontal beweglichen Transporteinrichtung (11), die unter den zu erzeugenden Mattenstreifen (2a) verfahrbar ist,
dadurch gekennzeichnet,daß die Vorrichtung ein Stützelement (12) enthält, das unter dem über die Klemmeinrichtung (7) hinausragenden Endabschnitt (2b) der Werkstoffbahn (2) zur Anlage bringbar, diesen abstützend synchron mit der Zuführbewegung mitführbar und nach dem Abschluß der Zuführbewegung vom Endabschnitt (2b) abziehbar ist und daß die Transporteinrichtung (11) derart unter den aus der Klemmeinrichtung (7) an der Schneideinrichtung (6) vorbei hinausragenden zu erzeugenden Mattenstreifen (2a) verfahrbar ist, daß nachdem das Stützelement (12) vom Endabschnitt (2b) der Werkstoffbahn (2) abgezogen ist, der durch Betätigung der Schneideinrichtung (6) erzeugte Mattenstreifen (2a) von der Transporteinrichtung (11) zur Bildung des Mattenpaketes aufnehmbar ist.

5. Vorrichtung nach Anspruch 4, dadurch gekennzeichnet, daß das Stützelement (12) an einer geradlinigen Führungsbahn verfahrbar gehalten ist.

6. Vorrichtung nach Anspruch 5, dadurch gekennzeichnet, daß das Stützelement (12) bezüglich der Führungsbahn schwenkbar und über einen Schwenkantrieb in unterschiedlichen Schwenkstellungen festhaltbar ist.

7. Vorrichtung nach einem der Ansprüche 4 bis 6, dadurch gekennzeichnet, daß der dem Endabschnitt (2b) der Werkstoffbahn (2) zugewandte Stützbereich (12a) des Stützelements (12) bezüglich der Ebene der Werkstoffbahn abwärts gekrümmt ist.

8. Vorrichtung nach einem der Ansprüche 4 bis 7, dadurch gekennzeichnet, daß der dem Endabschnitt (2b) der Werkstoffbahn (2) zugewandte Stützbereich (12a) des Stützelements (12) haftungsvermindernd ausgestaltet ist.

9. Vorrichtung nach einem der Ansprüche 4 bis 8, gekennzeichnet durch eine Schneideinrichtung (6) mit einem bezüglich der Ebene der Werkstoffbahn (2) schräggestellten Schneidteil (6a).

## Claims

1. Process for manufacturing packages of mats from tacky webs of material, in particular webs for the production of mats impregnated with SMC resin, whereby the web of material (2) is supplied, in accordance with the width of the mat strip (2a) to be produced, section by section, to a clamping device (7) and, while removing its cover foils (8, 9), to a cutting device (6) and is divided by said cutting device into mat strips (2a) whenever the clamping device (7) is actuated, several of said mat strips being, in each case, deposited one above the other on a conveying device (11),
characterised in that
after every cutting operation a support unit (12) is pushed under end section (2b) of the web of material (2) projecting from the clamping device (7) and is during the supply movement moved synchronously with said supply movement while supporting said end section, and in that with a view to forming a new package of mats the conveying device (11) is driven under the material strip (2a) to be produced so as to ensure that, once the supply movement has stopped and the support unit (12) has thereafter been withdrawn from the web of material (2), the mat strip (2a) produced in the course of every cutting operation can be taken up by the conveying device (11).

2. Process according to claim 1,
characterised in that
the support unit (12) is caused to rest against the end section (2b) as a result of a movement in a straight line.

3. Process according to claim 1
characterised in that
the web of material (2) is divided, by cuts oblique in relation to its plane, into mat strips (2a).

4. Arrangement for carrying out the process according to at least one of claims 1 to 3 comprising a clamping device (7), a cutting device (6) and a feeding device (5), by means of which the web of material (2) can be advanced past the clamping device (7) into the zone of the cutting device (6), and further comprising a cover foil take-off device (10a, 10b) arranged between the clamping device (7) and the cutting device (6) as well as a vertically and horizontally moveable conveying device (11) capable of being driven under the mat strip (2a) to be produced, characterised in that the arrangement comprises a support unit (12) which can be caused to rest against the end section (2b) of the web of material (2) protruding beyond the clamping device (7), which is capable of being driven synchronously with the advancing movement while supporting said end section and which can be withdrawn after conclusion of the advancing movement from the end section (2b), and in that the conveying device (11) can be so driven under the mat strip (2a) to be produced, said mat strip (2a) projecting from the clamping device (7) and past the cutting device (6), that after withdrawal of the support unit (12) from end section (2b) of the web of material (2), the mat strip (2a) produced by actuating the cutting device (6) can be taken up by the conveying unit (11) so as to form the package of mats.

5. Arrangement according to claim 4, characterised in that the support unit (12) is made capable of being driven along a guide track arranged in a straight line.

6. Arrangement according to claim 5, characterised in that the support unit (12) can be swivelled in relation to the guide track and secured, with the aid of a swivel drive, in different swivelled positions.

7. Arrangement according to one of claims 4 to 6, characterised in that the support zone (12a) of support unit (12) facing end section (2b) of the web of material (2) is, in relation to the plane of the web of material, curved downwards.

8. Arrangement according to one of claims 4 to 7, characterised in that the support zone (12a) of support unit (12) facing end section (2b) of the web of material (2) is so designed as to reduce adhesion.

9. Arrangement according to one of claims 4 to 8, characterised by a cutting device (6) with a cutting element (6a) inclined in relation to the plane of the web of material (2).

## Revendications

1. Méthode de fabrication de produits stratifiés en partant de bandes autocollantes, en particulier de bandes de mats SMC imprégnés de résine, pour laquelle la bande (2) est amenée par segments à un dispositif de serrage (7), en fonction de la largeur de la bande de mats (2a) à produire et, lorsque ses feuilles de recouvrement (8, 9) ont été enlevées, à un dispositif de coupe (6) puis est divisée par celui-ci en bandes de mats (2a) en actionnant le dispositif de serrage (7), bandes de mats dont plusieurs sont déposées à chaque fois les unes sur les autres, sur un dispositif de transport (11), caractérisée en ce qu'après chaque processus de coupe, un élément-support (12) est poussé sous la partie terminale (2b) de la bande (2), partie terminale qui fait saillie hors du dispositif de serrage (7), et est mis en mouvement, en supportant celle-ci, pendant le mouvement d'amenée et de façon synchrone avec lui, et en ce que, pour former un nouveau produit stratifié, le dispositif de transport (11) est déplacé à chaque fois en dessous de la bande de mats (2a) à produire et de telle manière qu'après que le mouvement d'amenée ait été stoppé puis que l'élément-support (12) ait été retiré de la bande (2), la bande de mats (2a) produite pendant chaque processus de coupe puisse être reçue par le dispositif de transport (11).

2. Méthode selon la revendication 1, caractérisée en ce que l'élément-support (12) est amené à l'installation par un mouvement rectiligne sur la partie terminale (2b).

3. Méthode selon la revendication 1, caractérisée en ce que la bande (2) est divisée en bandes de mats (2a) par des coupes obliques par rapport à son plan.

4. Dispositif de fabrication selon au moins l'une des revendications 1 à 3, muni d'un dispositif de serrage (7), d'un dispositif de coupe (6) et d'un dispositif d'avance (5) qui permet d'amener la bande (2) le long du dispositif de serrage (7), dans la zone du dispositif de coupe (6), ainsi que d'un dispositif d'enlèvement des feuilles de recouvrement (10a, 10b) qui est disposé entre le dispositif de serrage (7) et le dispositif de coupe (6) et d'un dispositif de transport (11) mobile de façon verticale et horizontale et déplaçable sous les bandes de mats (2a) à produire, caractérisé en ce que le dispositif renferme un élément-support (12) qui peut être amené à l'installation sous la partie terminale (2b) de la bande (2), partie terminale faisant saillie au-dessus du dispositif de serrage (7), qui peut être entraîné, en supportant celle-ci, de façon synchrone avec le mouvement d'amenée et qui peut être retiré de la partie terminale (2b) lorsque le mouvement d'amenée est terminé et en ce que le dispositif de transport (11) peut être déplacé de telle manière sous les bandes de mats (2a) à produire et qui font saillie hors du dispositif de serrage (7), le long du dispositif de coupe (6), qu'après que l'élément-support (12) ait été retiré de la partie terminale (2b) de la bande (2), la bande de mats (2a) produite par actionnement du dispositif de coupe (6) puisse être recueillie du dispositif de transport (11) pour former le produit stratifié.

5. Dispositif selon la revendication 4, caractérisé en ce que l'élément-support (12) est maintenu de façon déplaçable sur une glissière rectiligne.

6. Dispositif selon la revendication 5, caractérisé en ce que l'élément-support (12) est orientable par rapport à la glissière et peut être maintenu par l'intermédiaire d'une commande orientable dans différentes positions de pivotement.

7. Dispositif selon l'une des revendications 4 à 6, caractérisé en ce que la zone-support (12a) de l'élément-support (12), tournée vers la partie terminale (2b) de la bande (2), est courbée vers le bas par rapport au plan de la bande.

8. Dispositif selon l'une des revendications 4 à 7, caractérisé en ce que la zone-support (12a) de l'élément-support (12), tournée vers la partie terminale (2b) de la bande (2), est conçue de façon à diminuer l'adhérence.

9. Dispositif selon l'une des revendications 4 à 8, caractérisé par un dispositif de coupe (6) présentant une partie coupante (6a) inclinée par rapport au plan de la bande (2).
